Europäisches Patentamt

European Patent Office

Office européen des brevets

(19)

(11) Publication number: **0 140 315**

**A1**

(12) # EUROPEAN PATENT APPLICATION

(21) Application number: **84112675.8**

(22) Date of filing: **22.10.84**

(51) Int. Cl.⁴: **B 01 D 13/00**
**A 61 M 1/18, A 61 M 1/26**
**A 61 M 1/34**

(30) Priority: **03.11.83 IT 4010383**

(43) Date of publication of application:
**08.05.85 Bulletin 85/19**

(84) Designated Contracting States:
**AT BE CH DE FR GB LI NL SE**

(71) Applicant: **Azzolini, Graziano**
**Viale K. Gavioli Medaglia d'oro 8**
**I-41032 Cavezzo (Provence of Modena)(IT)**

(72) Inventor: **Azzolini, Graziano**
**Viale K. Gavioli Medaglia d'oro 8**
**I-41032 Cavezzo (Provence of Modena)(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Filter for hemodialysis and/or hemofiltration and/or plasmapheresis.

(57) This invention relates to a filter for hemodialysis and/or hemofiltration and/or plasmapheresis, which comprises a body (2) having an upper portion (2a) and a lower portion (2b) enclosing a plurality of longitudinally laid hollow filtering fiber bundles (3) the ends whereof are captive in sealing means (3a,4,5) adapted to simultaneously rotate them about their axes, said body (2) being provided, at said upper (2a) and said lower (2b) portions thereof, with a first blood inlet port (8a), and respectively first blood outlet port (8b) equipped with members (9,10) for fitting the filter (1) to a line, as well as with second inlet (10a) and outlet (10b) ports for the dialytic (or purifier) liquid located close to the bottom and top ends of said body (2), said upper portion (2a) being also provided with a device (16) for selecting a number of fiber bundles (3) to be used and said bottom portion (2b) being provided with a means (17,19) of connection to a gear motor unit adapted to drive, through respective drives (6,7,18), all said bundles (3) to revolve about the axis of said enclosing body (2).

./...

FIG. 1

"FILTER FOR HEMODIALYSIS AND/OR HEMOFILTRATION
AND/OR PLASMAPHERESIS"

This invention relates to a filter for hemodialysis and/or hemofiltration and/or plasmapheresis.

Known     in the fields of plasmapheresis, hemo-
filtration, and hemodialysis,are blood filters which may
be classed according to two general types: a first
type embodied by filters which comprise a plurality
of fluted superimposed plates having the flutes set in
mutual alignment, thus forming a plurality of small
mutually parallel channels, between which are interposed two filtering membranes; the assembly is placed
into a respective container having two inlet ports
and two outlet ports, through which the dialytic
liquid is caused to flow; the blood to be purified is
caused to flow between the two filtering membranes,
causing     the affected membrane portion to adhere
against the walls of each corresponding flute.

The second filter type is embodied by a vertical
cylindrical body of sort which contains a longitudinally
laid bundle of hollow fibers forming the filtering
body proper, blood, for example, to be dialyzed being
caused to flow therethrough; an interspace of sort is provided around said bundle, the dialytic liquid flows
through said interspace, and also flows between fibers in
said bundle to electrolytically remove impurities left
on them by blood flowing past.

Such filter types are completed by upper and lower
manifolds, respectively for blood admission and
discharge, and two side ports, one located close to
dialytic liquid inlet bottom and outlet top, respectively.

The pore size of the membranes in the former case, and additionally the fiber cavity size in the latter, are such as to prevent, owing to the density of blood, its exiting the intended path, with consequent mixing with the dialytic liquid.

Such prior filters have, however, some deficiencies that make their use expensive as well as laborious.

There occurs primarily, during the treatment of a patient's blood, a significant decrease in the filtering capacity, due essentially to impurity (fibrin) build-ups on either the hollow fibers or membranes, with attendant partial occlusion of the pores formed in both of them; furthermore, owing to said membranes and fibers being sold as specimens having single wall thickness dimensions of the capillaries as well as different useful surfaces of the filtering body, where a patient is to be subjected to blood purifying treatment using, according to the attending physician judgement, several filter types, replacement of the latter becomes necessary each time, which involves the availability of stocks of different filter types.

It is the technical aim of this invention to obviate the aforementioned prior shortcomings by providing a filter for hemodialysis and/or hemofiltration and/or plasmapheresis which can simultaneously make available filtering units having varying capillary useful surface and thickness characteristics, and above all, can retain its filtering capacity almost unaltered.

This and other objects are achieved by a filter for hemodialysis and/or hemofiltration and/or plasmapheresis, characterized in that it comprises a body enclosing a plurality of longitudinally laid hollow filtering fiber bundles, the ends whereof are captive in sealing means adapted to rotate them simultaneously about their axes, said body being provided at the top and bottom with first blood inlet, respectively outlet, ports equipped with members for fitting the filter to a line, as well as second inlet and outlet ports for the dialytic (or purifier) liquid located close to said top and bottom ends, the top one being also provided with a device for selecting the number of usable fiber bundles and the bottom one being provided with a means of connection to a gear motor unit adapted, with the interposition of respective drives, to cause all said bundles to revolve about the axis of said enclosing body.

Further features and advantages of the invention will be apparent from the following detailed description of a preferred, but not exclusive, embodiment of a filter for hemodialysis and/or hemofiltration and/or plasmapheresis, as illustrated by way of example and not of limitation in the accompanying drawings, where:

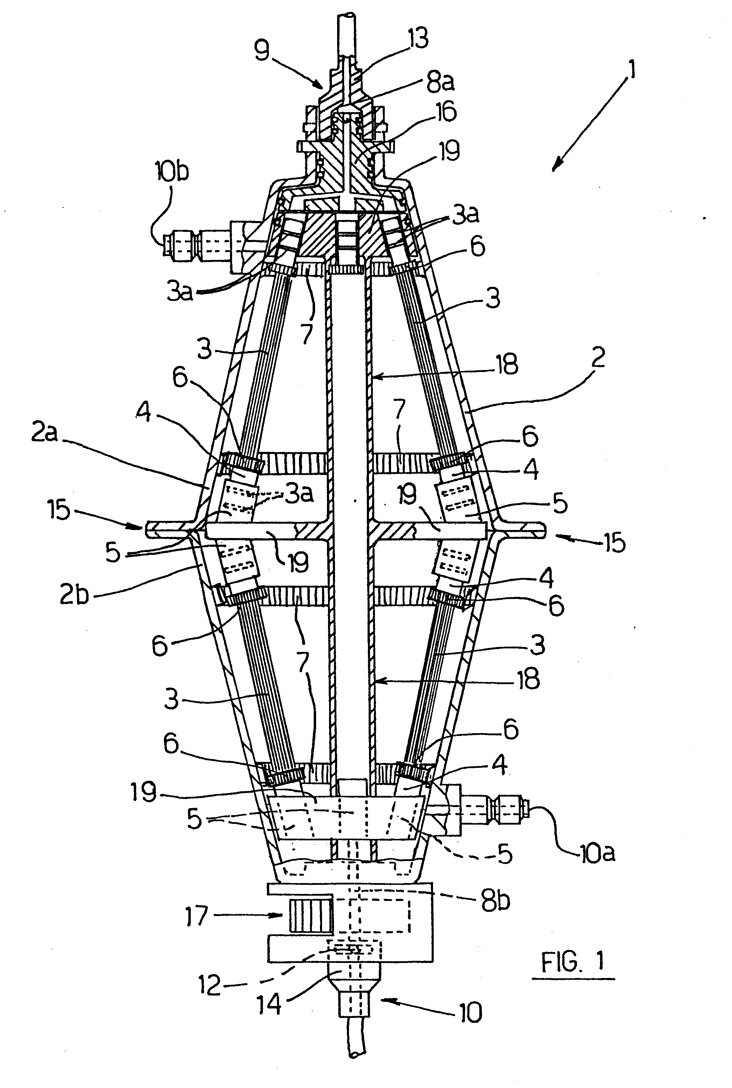

Figure 1 is a schematical cross-section view of the invention;

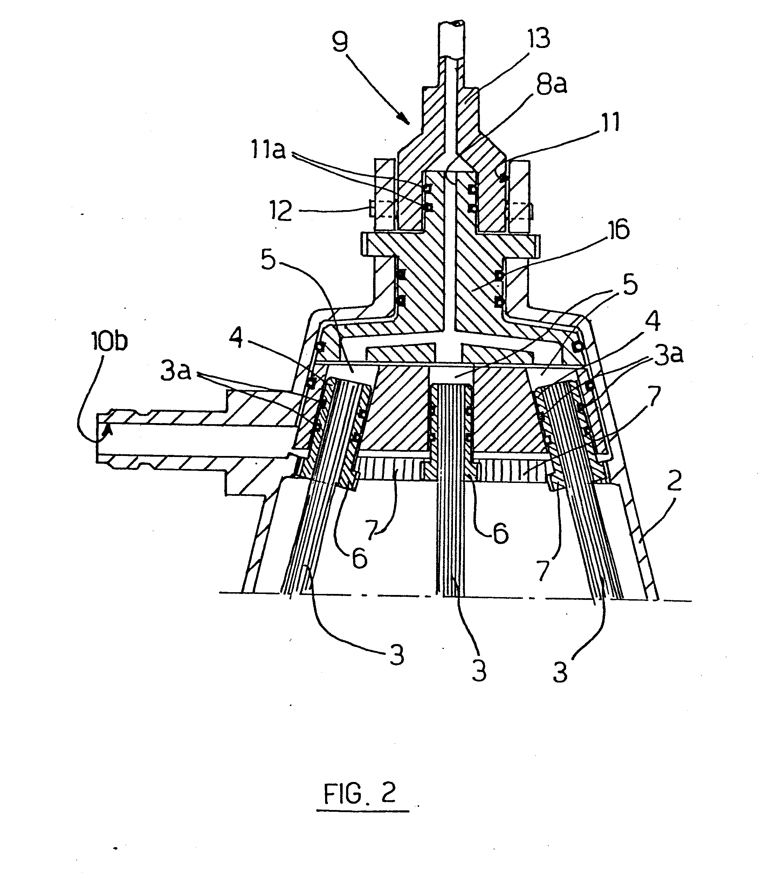

Figure 2 is an enlarged scale view of a section of the upper portion of the invention.

More detailedly, generally indicated at 1 is a filter for hemodialysis and/or hemofiltration and/or plasmapheresis which comprises a body 2 enclosing a plurality of bundles 3 of hollow filtering fibers the ends whereof are captive, in a sealed fashion by means of gaskets 3a, in respective hollow end fittings 4 set rotatable axially in a cavity formed in corresponding small blood manifold blocks 5.

Rigid and coaxial with the end fittings 4 are pinions 6 which mesh with respective toothings 7 formed on the inside periphery of the enclosing body 2 which also has, at the top and bottom thereof, first blood inlet and outlet ports, 8a and 8b, respectively, which are provided with members 9 and 10 for fitting the filter 1 to a line.

Also provided are second dialytic (or purifier) liquid inlet and outlet ports, 10a, 10b which are located, respectively, close to the bottom and to the top of said body 2. The members 9 and 10 comprise mouths 11 wherethrough respective caps 13 and 14 fast with said line can be inserted sealingly by means of gaskets 11a and with connections 12 of the so-called "bayonet" type.

Said enclosing body 2 is preferably subdivided into two portions 2a, 2b which can be joined together by utilization of suitable jointing means 15.

The upper portion 2a is provided, substantially at the top, with a device 16 for selecting the number of usable bundles 3, while the lower portion 2b is provided with a means 17 of connection to a gear motor unit adapted to cause, through the intermediary of respective drives 18, all the bundles 3 to revolve about the axis of said enclosing body 2.

The cited means 17 which causes the bundles 3 to perform a revolving motion, comprises a set of mutually parallel and concentrical plates 19 wherewith the manifold blocks 4 are rigid, and which are connected axially to the cited devices 18; of the plates 19, at least one is linked to the connection means 17 to a gear motor unit.

The invention operates as follows: it is connected to a line transporting a patient's blood to be purified by means of the members 9 and 10.

The cited blood is passed through the top port 8a, small manifold blocks 4, and hollow fiber bundles 3 forming the filtering body, to reach the outlet port 8b. Along said path , there is introduced, in counterflow relationship with the path followed by the blood, through the port 10a, the dialytic (or purifier) liquid, which after sweeping the bundles 3 and removing, generally electrolytically, the impurities deposited in the hollow fibers by said blood passed therethrough, flows towards the outlet port 10b.

During that process, the hollow fiber bundles 3, in order to improve the exchange between the blood and dialytic liquid and avoid losses of filtering capacity, are all driven in a revolving motion around the axis of the filter 1 by connecting the means 17 to a gear motor unit which rotates the plates 19; further, and

0140315

consequently, the end fittings 5 being provided with respective pinions 6 which mesh with the respective peripheral toothings 7 formed inside the body 2, the bundles 3 are also driven rotatively each about its own axis in the opposite direction to that of the revolving motion.

It should be noted that the filtering surface and porosity characteristics of the hollow fibers may vary between bundles, and that a device 16, located close to the top of the filter 1, is provided which can select the number of bundles to be used; this selection is preset by the operator according to the patient's build, and hence, to the amount of blood to be dialyzed or purified.

It has been found in practice that the device heretofore described achieves its objects.

The invention as disclosed is susceptible to many modifications and changes without departing from the purview of the inventive idea; thus, as an example, both the shape of the enclosing body and number of the hollow fiber bundles, as well as their arrangement inside said body, may be changed without adversely affecting the invention operation.

All of the details, moreover, may be replaced with other technically equivalent elements.

In practice, any materials or dimensions may be any selected and used, contingent on requirements, without by so doing departing from the protection scope of the appended claims.

## CLAIMS

1. A filter for hemodialysis and/or hemofiltration and/or plasmapheresis, characterized in that it comprises a body (2) having an upper portion (2a) and a lower portion (2b), enclosing a plurality of longitudinally laid hollow filtering fiber bundles (3) the ends whereof are captive in sealing means (3a,3,4,5) adapted to rotate them simultaneously about their axes, said body (2) being provided at said upper (2a) and said lower (2b) portions thereof with first blood inlet (8a), and first blood outlet (8b) ports, equipped with members (9,10) for fitting the filter (1) to a line, as well as second inlet (10a) and outlet (10b) ports for the dialytic (or purifier) liquid located close to the top and bottom ends of said body (2), said upper portion (2a) being also provided with a device (16) for selecting the number of usable fiber bundles (3) said lower portion (2b) being provided with a means (17) of connection to a gear motor unit adapted, with the interposition of respective drives (6,7,18), to cause all said bundles (3) to revolve about the axis of said enclosing body (2).

2. A filter according to Claim 1, characterized in that said body (2) is divided transversely into two said portions (2a,2b) which can be joined together by respective means (15).

3. A filter according to Claim 2, characterized in that said means (15) of joining the two portions (2a,2b) together comprise two peripheral edges projecting horizontally from each said portion (2a,2b) and associable facing each other by welding.

4. A filter according to Claim 2, and alternatively to Claim 3, characterized in that said means (15) of joining the two portions (2a,2b) together comprise an outer peripheral thread projecting downwardly from a first of said portions and threadable in a corresponding peripheral thread formed upwardly inside the second portion.

5. A filter according to Claim 1, characterized in that said sealing means comprise each an axially hollow end fitting (4), wherein the ends of said bundles (3) are sealed by gaskets (3a) having a rotatable head within a cavity formed in a blood manifold small block (5) for the blood flowing through the fiber bundles (3), said rotation of each bundle (3) being accomplished by a pair of pinions (6), coaxial with the end fittings (4) and rigid therewith, which mesh with respective toothings (7) formed on the inside periphery of said enclosing body (2).

6. A filter according to Claim 1, characterized in that said members for fitting the filter to a line comprise mouths (11) wherethrough respective caps (13) attached to said line may be sealingly inserted with connections (12) of the "bayonet" type.

7. A filter according to Claim 1, characterized in that said means (17) adapted to cause the bundles to revolve comprises a set of parallel concentrical plates (19) mutually interconnected axially together in a rigid fashion and wherewith said small manifold blocks (4) are fast, at least one of said plates being also linked to said means (17) of connection to a gear motor unit.

FIG. 1

FIG. 2

| | European Patent Office | **EUROPEAN SEARCH REPORT** | Application number |
|---|---|---|---|

EP 84 11 2675

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 003 054 (WORLD DEVELOP-MENT LABORATORIES)<br><br>* Figures 1-3,5,7; page 2, line 86 - page 3, line 18; page 4, lines 21-60, 88-121 *<br><br>--- | 1,7 | B 01 D 13/00<br>A 61 M   1/18<br>              1/26<br>              1/34 |
| A | DE-A-3 112 647 (BUCKAU-WALTHER AG)<br><br>* Page 13, line 1 - page 14, line 14; figures 1-3,8-10; claims 5,10,11 *<br><br>--- | 1 | |
| A | FR-A-1 307 979 (THE DOW CHEM.CO.)<br><br>* Figures 1-4,6; page 2, column 2, line 39 - page 3, column 2, line 17; page 9, column 1, lines 42-48 *<br><br>--- | 1,5 | |
| A | FR-A-2 204 438 (U.K. ATOMIC ENERGY AUTHORITY)<br><br>* Figures 1,5; claims 1,6,8 *<br><br>--- | 1 | TECHNICAL FIELDS SEARCHED (Int. Cl.4)<br><br>A 61 M<br>B 01 D |
| A | EP-A-0 076 422 (GAMBRO LUNDIA AB)<br><br>* Figure 1; abstract *<br><br>--- | 1 | |

-/-

The present search report has been drawn up for all claims

| Place of search | Date of completion of the search | Examiner |
|---|---|---|
| THE HAGUE | 04-02-1985 | HOORNAERT P. |

0140315

European Patent Office

EUROPEAN SEARCH REPORT

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | FR-A-2 194 463 (V.ABRAMOV et al.) ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 04-02-1985 | HOORNAERT P. |